# EUROPÄISCHE PATENTANMELDUNG

(11) **EP 2 230 430 A1**
(43) Veröffentlichungstag der Anmeldung: **22.09.2010**
(21) Anmeldenummer: 09003789.6
(22) Anmeldetag: 16.03.2009
(51) Int. Cl.: F16K 31/56, F16K 47/02, F01D 17/14, F16K 1/44, F16K 3/26

(54) **Kombiniertes Regel-Schnellschluss-Ventil für eine Dampfturbine**

(71) Anmelder: Siemens Aktiengesellschaft, 80333 München (DE)
(72) Erfinder: Bennauer, Martin, 46242 Bottrop (DE); Flohr, Ningsih, 45481 Mülheim a.d. Ruhr (DE); Nienhaus, Michael, 46325 Borken (DE); Schindler, Christoph, 45219 Essen (DE); Weltersbach, Dirk, 44805 Bochum (DE)

(57) **Zusammenfassung**

Ein Regel-Schnellschluss-Ventil für eine Dampfturbine weist ein Gehäuse (2) mit einer Eintrittsöffnung (3), durch die Dampf (7) in den Innenraum (11) des Gehäuses (2) einströmbar ist, und einer Austrittsöffnung (4), durch die der Dampf (7) aus dem Innenraum (11) des Gehäuses herausströmbar ist, und einen Kolben (13) auf, der in dem Gehäuse (2) angeordnet ist und an seinem Außenumfang an dem Gehäuse (2) stets dampfdicht anliegt sowie einen Durchgangskanal (14) aufweist, der in den Außenumfang mündet, wobei der Kolben (13) relativ zu dem Gehäuse (2) verschiebbar angeordnet und dadurch in eine Durchgangsstellung, in der in Abhängigkeit des Überlappungsgrads der Eintrittsöffnung (3), der Austrittsöffnung (4) und des Durchgangskanals (14) Dampf (7) von der Eintrittsöffnung (3) zu der Austrittsöffnung (4) via den Durchgangskanal (14) passierbar ist, wodurch die Regelfunktion des Regel-Schnellschluss-Ventils (1) erzielt ist, und in eine Sperrstellung bringbar ist, in der die Eintrittsöffnung (3) und/oder die Austrittsöffnung (4) von dem Außenumfang des Kolbens (13) verschlossen ist, wodurch die Schnellschlussfunktion des Regel-Schnellschluss-Ventils (1) erzielt ist.

## Beschreibung

Die Erfindung betrifft ein Regel-Schnellschluss-Ventil für eine Dampfturbine, wobei in dem Regel-Schnellschluss-Ventil ein Regelventil und ein Schnellschlussventil miteinander kombiniert sind.

An einer Dampfturbine, die beispielsweise in einem Dampfkraftwerk eingesetzt ist, ist für den sicheren Betrieb der Dampfturbine frischdampfseitig eine Absperrung durch ein Schnellschlussventil und zur Regelung der Frischdampfzufuhr zu der Dampfturbine ein Regelventil vorgesehen. Das Regelventil und das Schnellschlussventil sind hintereinander jeweils in ein separates Gehäuse eingebaut. Aus Sicherheitsgründen ist die Schnellschlussfähigkeit durch das Regelventil und das Schnellschlussventil redundant bereitgestellt. Das Regelventil und das Schnellschlussventil weisen jeweils eigene Tellerfedern auf, die im Störfall zum schnellen Schließen der Ventile führen. Herkömmlich sind das Schnellschlussventil und das Regelventil als in Reihe geschaltete Hubventile ausgeführt, wobei eines der Hubventile die Schnellschlussfunktion ausübt und mit dem anderen Hubventil die Frischdampfmassenstromregelung bewerkstelligt wird. Die Hubventile sind beispielsweise als Einsetzventile gebaut, die wegen ihrer guten Dichtheit und ihres geringen Druckverlusts vorteilhaft sind. Allerdings sind herkömmlich die Hubventile mit einem großen und schweren Gehäuse konstruiert, woraus ein hoher Materialeinsatz resultiert. Die Folge hiervon ist ein hoher Herstellungsaufwand bei hohen Kosten. Ferner haben die herkömmlichen Hubventile einen großen Platzbedarf, so dass die frischdampfseitige Verrohrung an dem Dampfturbinengehäuse entsprechend voluminös ausfällt.

Aufgabe der Erfindung ist es ein Regel-Schnellschluss-Ventil für eine Dampfturbine zu schaffen, wobei das Regel-Schnellschluss-Ventil eine kompakte und materialeinsparende sowie eine kostengünstige Konstruktion hat.

Das erfindungsgemäße Regel-Schnellschluss-Ventil für eine Dampfturbine weist ein Gehäuse mit einer Eintrittsöffnung, durch die Dampf in den Innenraum des Gehäuses einströmbar ist, und einer Austrittsöffnung, durch die der Dampf aus dem Innenraum des Gehäuses herausströmbar ist, und einen Kolben auf, der in dem Gehäuse angeordnet ist und an seinem Außenumfang an dem Gehäuse stets dampfdicht anliegt sowie einen Durchgangskanal aufweist, der in den Außenumfang mündet, wobei der Kolben relativ zu dem Gehäuse verschiebbar angeordnet und dadurch in eine Durchgangsstellung, in der in Abhängigkeit des Überlappungsgrads der Eintrittsöffnung, der Austrittsöffnung und des Durchgangskanals Dampf von der Eintrittsöffnung zu der Austrittsöffnung via den Durchgangskanal passierbar ist, wodurch die Regelfunktion des Regel-Schnellschluss-Ventils erzielt ist, und in eine Sperrstellung bringbar ist, in der die Eintrittsöffnung und/oder die Austrittsöffnung von dem Außenumfang des Kolbens verschlossen ist, wodurch die Schnellschlussfunktion des Regel-Schnellschluss-Ventils erzielt ist.

Somit sind in dem erfindungsgemäßen Regel-Schnellschluss-Ventil ein Regelventil und ein Schnellschlussventil kombiniert in das einteilige Gehäuse eingebaut, wobei das Regelventil und das Schnellschlussventil mit dem Kolben, der in dem Gehäuse relativverschiebbar ist, realisiert ist. Dadurch, dass das Regelventil und das Schnellschlussventil in dem erfindungsgemäßen Regel-Schnellschluss-Ventil miteinander kombiniert sind, hat das Regel-Schnellschluss-Ventil eine platzsparende Anordnung. Damit ist das Volumen des Gehäuses verglichen mit den herkömmlichen Gehäusen für ein herkömmliches Regelventil und ein herkömmliches Schnellschlussventil reduziert, wodurch der Materialeinsatz und letztlich die Herstellungskosten für das erfindungsgemäße Regel-Schnellschluss-Ventil reduziert sind.

Bevorzugtermaßen sind das Gehäuse als ein Hohlzylinder und der Kolben als ein Zylinder geformt, deren Mittelachsen zusammenfallen. Die Eintrittsöffnung und die Austrittsöffnung sind bevorzugt in der zylindrischen Wandung des Gehäuses vorgesehen und der Durchgangskanal ist bevorzugt in dem Kolben senkrecht zur Mittelachse des Kolbens verlaufend ausgebildet, wobei die Eintrittsöffnung, die Austrittsöffnung und der Durchgangskanal auf einer gedachten Gerade fluchten, wenn der Kolben in der Durchgangsstellung ist sowie die Eintrittsöffnung, die Austrittsöffnung und der Durchgangskanal sich vollständig überlappen. Der Kolben weist bevorzugt an seinem Außenumfang mindestens einen Kolbenring auf, mit dem an dem Außenumfang der Kolben an dem Gehäuse stets dampfdicht abgedichtet ist. Bevorzugt weist der Kolben zwei der Kolbenringe auf, zwischen denen die in dem Außenumfang vorgesehenen Mündungen des Durchgangskanals angeordnet sind, so dass der Durchgangskanal von den Kolbenringen vom Innenraum dampfdicht isoliert ist.

Ferner ist es bevorzugt, dass der Kolben eine Spindel, deren Mittelachse mit der des Kolbens zusammenfällt, und das Gehäuse eine Öffnung aufweist, durch die die Spindel nach außen sich erstreckt, so dass via die Spindel an dem Kolben eine von außen angreifende Verschiebekraft beaufschlagbar ist. Der Kolben weist bevorzugt an der der Spindel abgewandten Seite einen Zapfen auf, dessen Mittelachse mit der des Kolbens zusammenfällt. Ferner sind bevorzugt in dem Gehäuse ein erstes Lager und ein zweites Lager vorgesehen, wobei mit dem ersten Lager der Zapfen und mit dem zweiten Lager die Spindel längsverschiebbar abgestützt sind. Hierbei weist bevorzugt das Gehäuse ein Sackloch auf, indem das erste Lager angeordnet ist und in das der Zapfen versenkbar ist, wenn der Kolben in der Durchgangsstellung oder in der Sperrstellung ist. Ferner ist bevorzugt an dem Gehäuse befestigt ein Schaft vorgesehen, dessen Mittelachse mit der des Gehäuses zusammenfällt, so dass via den Schaft an dem Gehäuse eine von außen angreifende Verschiebekraft angreifbar ist. Zur Bewerkstelligung der Schnellschlussfunktion greift bevorzugt an dem Gehäuse eine Verschiebekraft und zur Bewerkstelligung der Regelfunktion greift bevorzugt an dem Kolben eine andere Verschiebekraft an.

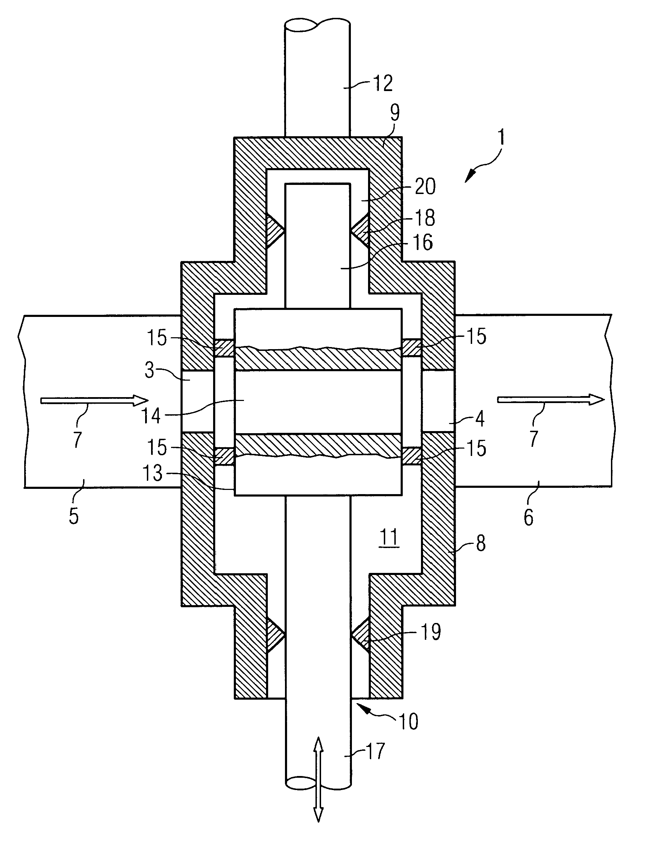

Im Folgenden wird eine bevorzugte Ausführungsform des erfindungsgemäßen Regel-Schnellschluss-Ventils anhand der beigefügten schematischen Zeichnung erläutert. Es zeigt Fig. 1 einen Längsschnitt der erfindungsgemäßen Ausführungsform des Regel-Schnellschluss-Ventils.

Wie es aus Fig. 1 ersichtlich ist, weist ein Regel-Schnellschluss-Ventil 1 ein Gehäuse 2 auf, das zylindrisch ausgebildet ist. In der Zylinderwandung des Gehäuses 2 weist dieses eine Eintrittsöffnung 3 und eine Austrittsöffnung 4 auf, wobei die Mittelpunkte der Öffnungen 3, 4 auf einer gedachten Gerade liegen, die senkrecht zur Mittelachse des zylindrischen Gehäuses 2 verläuft. An der Eintrittsöffnung 3 ist ein Zuströmkanal 5 und an der Austrittsöffnung 4 ein Abströmkanal anschließbar, so dass durch den Zuströmkanal 5 eine Dampfströmung 7 zu der Eintrittsöffnung 3 hingeführt und durch den Abströmkanal 6 von der Austrittsöffnung 4 die Dampfströmung 7 abgeführt wird. Ist das Regel-Schnellschluss-Ventil 1 an eine Dampfturbine montiert, so bildet beispielsweise der Frischdampfstutzen der Dampfturbine den Abströmkanal 6, wohingegen eine Frischdampfleitung den Zuströmkanal 5 bildet.

Das Gehäuse 2 ist von einem Zylinderabschnitt 8 gebildet, der an seiner einen Seite mit einem Deckel 9 längsseitig verschlossen ist und an seiner anderen, dem Deckel 9 abgewandten Seite stirnseitig eine Öffnung 10 aufweist. Der Innenraum 11 des Zylinderabschnitts 8 ist ebenfalls zylindrisch ausgebildet. An dem Deckel 9 ist ein Schaft 12 mit seiner Stirnseite befestigt, wobei die Mittelachsen des Schafts 12 und des Zylinderabschnitts 8 zusammenfallen.

In dem Innenraum 11 ist ein Kolben 13 angeordnet, dessen Mittelachse mit der des Zylinderabschnitts 8 zusammenfällt. Der Kolben 13 ist in dem Innenraum 11 längsverschiebbar entlang der Mittelachse des Zylinderabschnitts 8 an dessen Innenseite gelagert. Der Kolben 13 weist einen Durchgangskanal 14 auf, der senkrecht zu der Mittelachse des Zylinderabschnitts 8 verläuft. Die Erstreckung des Innenraums 11 in Richtung der Mittelachse des Zylinderabschnitts 8 ist derart dimensioniert, dass der Kolben 13 in dem Innenraum in eine Position gebracht werden kann, in der der Durchgangskanal 14 mit der Eintrittsöffnung 3 und der Austrittsöffnung 4 fluchtet, wie es in Fig. 1 gezeigt ist. Dabei kann die Dampfströmung 7 das Regel-Schnellschluss-Ventil 1 via die Eintrittsöffnung 3, den Durchgangskanal 14 und die Austrittsöffnung 4 passieren. Zwischen dem Kolben 13 und dem Zylinderabschnitt 8 sind entlang der Mittelachse des Zylinderabschnitts 8 gesehen zwei hintereinander liegende Kolbenringe 15 vorgesehen, die, wenn der Kolben 13 in der vorher genannten Position ist, beidseitig der Eintrittsöffnung 3 und der Austrittsöffnung 4 angeordnet sind, so dass von den Kolbenringen 15 der Durchgangskanal 14 von dem restlichen Innenraum 11 dampfdicht abgedichtet ist. Somit ist eine Leckage zwischen dem Kolben 13 und dem Zylinderabschnitt 8 in den restlichen Innenraum 11 unterbunden, wodurch die Dampfströmung 7 das Regel-Schnellschluss-Ventil 1 leckagefrei passieren kann.

An dem Deckel 9 hat das Gehäuse 2 einen Innendurchmesser, der kleiner ist als der Innendurchmesser des Zylinderabschnitts 8, so dass an dem Deckel 9 in dem Gehäuse 2 ein Sackloch 20 ausgebildet ist. In das Sackloch 20 erstreckt sich ein Zapfen 16, der an dem Kolben 13 stirnseitig und mittig angebracht ist. Mit Hilfe eines in dem Sackloch 20 vorgesehenen ersten Lagers 18 ist eine Longitudinalführung des Zapfens 16 hergestellt. An der dem Zapfen 16 abgewandten Seite des Kolbens 13 ist ebenfalls mittig und mit dem Zapfen 16 fluchtend eine Spindel 17 an dem Kolben 13 befestigt, die durch die Öffnung 10 des Gehäuses 2 ragt. In der Öffnung 10 ist ein zweites Lager 19 vorgesehen, mit dem eine Longitudinalführung der Spindel 17 bewerkstelligt ist. Der Kolben ist unter Betätigen der Spindel 17 in dem Innenraum 11 des Zylinderabschnitts 8 längsverschiebbar, wobei der Kolben 13 von dem Zapfen 16 an dem ersten Lager 18 und von der Spindel 17 an dem zweiten Lager 19 gelagert ist.

In Fig. 1 ist das Regel-Schnellschluss-Ventil 1 in Durchgangsstellung gezeigt, in der die Eintrittsöffnung 3, der Durchgangskanal 14 und die Austrittsöffnung 4 sich voll überlappend angeordnet sind. Die Relativstellung des Kolbens 16 bezogen auf den Zylinderabschnitt 8 kann durch Betätigung entweder der Spindel 17 oder des Schafts 12 geändert werden. Wird ausgehend von der in Fig. 1 gezeigten Stellung des Regel-Schnellschluss-Ventils 1 die Spindel 17 nach unten oder der Schaft 12 nach oben gezogen, so verändert sich die Stellung des Kolbens in dem Zylinderabschnitt 8 derart, dass der Überlappungsgrad der Eintrittsöffnung 3 und der Austrittsöffnung 4 mit dem Durchgangskanal 14 sich verringert. Dadurch nimmt der Massenstrom der Dampfströmung 7 ab. Bewegt sich der Kolben 13 in Fig. 1 gesehen weiter nach unten, so passiert schließlich der obere Kolbenring 15 die Öffnungen 3, 4 und verursacht schließlich eine räumliche Abtrennung des Durchgangskanals 14 von den Öffnungen 3, 4. Dadurch ist die Dampfströmung 7 durch das Regel-Schnellschluss-Ventil 1 unterbrochen.

Wird zum Bringen des Regel-Schnellschluss-Ventils 1 in den Schnellschluss der Schaft 12 betätigt und zum Bewerkstelligen der Regelfunktion des Regel-Schnellschluss-Ventils 1 die Spindel 17 bedient, so ist mit dem Regel-Schnellschluss-Ventil 1 eine Kombination aus der Schnellschlussfunktion und Regelfunktion hergestellt. Das Regel-Schnellschluss-Ventil hat mit dem Zylinderabschnitt 8 eine Hohlwelle-Konstruktion, wodurch lediglich ein kleiner Bauraum für das Regel-Schnellschluss-Ventil 1 vorgesehen zu werden braucht. Das Regel-Schnellschluss-Ventil 1 ist als ein Hubventil ausgebildet, das senkrecht zur Strömungsrichtung der Dampfströmung 7 angeordnet ist. Zum Regeln des Regel-Schnellschluss-Ventils wird nur der Kolben 13 verschoben, wohingegen beim Schnellschluss nur das Gehäuse 2 verschoben wird. Durch die Relativverschiebung des Kolbens 13 zu dem Gehäuse 2 wird der freie Strömungsquerschnitt zwischen den Öffnungen 3, 4 und dem Durchgangskanal 14 stufenlos verstellbar.

## Patentansprüche

1. Regel-Schnellschluss-Ventil für eine Dampfturbine, aufweisend ein Gehäuse (2) mit einer Eintrittsöffnung (3), durch die Dampf (7) in den Innenraum (11) des Gehäuses (2) einströmbar ist, und einer Austrittsöffnung (4), durch die der Dampf (7) aus dem Innenraum (11) des Gehäuses herausströmbar ist, und einem Kolben (13), der in dem Gehäuse (2) angeordnet ist und an seinem Außenumfang an dem Gehäuse (2) stets dampfdicht anliegt sowie einen Durchgangskanal (14) aufweist, der in den Außenumfang mündet,
wobei der Kolben (13) relativ zu dem Gehäuse (2) verschiebbar angeordnet und **dadurch** in eine Durchgangsstellung, in der in Abhängigkeit des Überlappungsgrads der Eintrittsöffnung (3), der Austrittsöffnung (4) und des Durchgangskanals (14) Dampf (7) von der Eintrittsöffnung (3) zu der Austrittsöffnung (4) via den Durchgangskanal (14) passierbar ist,
wodurch die Regelfunktion des Regel-Schnellschluss-Ventils (1) erzielt ist und in eine Sperrstellung bringbar ist, in der die Eintrittsöffnung (3) und/oder die Austrittsöffnung (4) von dem Außenumfang des Kolbens (13) verschlossen ist, wodurch die Schnellschlussfunktion des Regel-Schnellschluss-Ventils (1) erzielt ist.

2. Regel-Schnellschluss-Ventil gemäß Anspruch 1,
wobei das Gehäuse (2) als ein Hohlzylinder und der Kolben (13) als ein Zylinder geformt sind, deren Mittelachsen zusammenfallen.

3. Regel-Schnellschluss-Ventil gemäß Anspruch 2,
wobei die Eintrittsöffnung (3) und die Austrittsöffnung (4) in der zylindrischen Wandung (8) des Gehäuses (2) vorgesehen sind und der Durchgangskanal (14) in dem Kolben (13) senkrecht zur Mittelachse des Kolbens (13) verlaufend ausgebildet ist,
wobei die Eintrittsöffnung (3), die Austrittsöffnung (4) und der Durchgangskanal (14) auf einer gedachten Gerade fluchten, wenn der Kolben (13) in der Durchgangsstellung ist sowie die Eintrittsöffnung (3), die Austrittsöffnung (4) und der Durchgangskanal (14) sich vollständig überlappen.

4. Regel-Schnellschluss-Ventil gemäß Anspruch 3,
wobei der Kolben (13) an seinem Außenumfang mindestens einen Kolbenring (15) aufweist, mit dem an dem Außenumfang der Kolben (13) an dem Gehäuse (2) stets dampfdicht abgedichtet ist.

5. Regel-Schnellschluss-Ventil gemäß Anspruch 4,
wobei der Kolben (13) zwei der Kolbenringe (15) aufweist, zwischen denen die in dem Außenumfang vorgesehenen Mündungen des Durchgangskanals (14) angeordnet sind, so dass der Durchgangskanal (14) von den Kolbenringen (15) vom Innenraum (11) dampfdicht isoliert ist.

6. Regel-Schnellschluss-Ventil gemäß einem der Ansprüche 2 bis 5,
wobei der Kolben (13) eine Spindel (17), deren Mittelachse mit der des Kolbens (13) zusammenfällt, und das Gehäuse (2) eine Öffnung (10) aufweist, durch die die Spindel (17) nach außen sich erstreckt, so dass via die Spindel (17) an dem Kolben (13) eine von außen angreifende Verschiebekraft beaufschlagbar ist.

7. Regel-Schnellschluss-Ventil gemäß Anspruch 6,
wobei der Kolben (13) an der der Spindel (17) abgewandten Seite einen Zapfen (16) aufweist, dessen Mittelachse mit der des Kolbens (13) zusammen fällt.

8. Regel-Schnellschluss-Ventil gemäß Anspruch 7,
wobei in dem Gehäuse (2) ein erstes Lager (18) und ein zweites Lager (19) vorgesehen sind,
wobei mit dem ersten Lager (18) der Zapfen (16) und mit dem zweiten Lager (19) die Spindel (17) längsverschiebbar abgestützt sind.

9. Regel-Schnellschluss-Ventil gemäß Anspruch 8,
wobei das Gehäuse (2) ein Sackloch (20) aufweist, in dem das erste Lager (18) angeordnet ist und in das der Zapfen (16) versenkbar ist, wenn der Kolben (13) in der Durchgangsstellung oder in der Sperrstellung ist.

10. Regel-Schnellschluss-Ventil gemäß Anspruch 9,
wobei an dem Gehäuse (2) befestigt ein Schaft (12) vorgesehen ist, dessen Mittelachse mit der des Gehäuses (2) zusammenfällt, so dass via den Schaft (12) an dem Gehäuse (2) eine von außen angreifende Verschiebekraft angreifbar ist.

11. Regel-Schnellschluss-Ventil gemäß Anspruch 10,
wobei zur Bewerkstelligung der Schnellschlussfunktion an dem Gehäuse (2) die eine Verschiebekraft angreift und zur Bewerkstelligung der Regelfunktion an dem Kolben (13) die andere Verschiebekraft angreift.
